# EUROPEAN PATENT SPECIFICATION

(11) **EP 1 204 450 B1**
(45) Date of publication and mention of the grant of the patent: **20.04.2005**
(21) Application number: 00951011.6
(22) Date of filing: 09.08.2000
(51) Int. Cl.: B01D 45/14

(54) **POWERED AIR PRECLEANER DEVICE AND METHOD FOR PROVIDING A CLEAN AIR FLOW**
VORRICHTUNG ZUR VORFILTERUNG VON LUFT UND VERFAHREN ZUR ERZEUGUNG EINES SAUBEREN LUFTSTROMS
APPAREIL ACTIF DE PREFILTRAGE ET PROCEDE POUR L'OBTENTION D'UN FLUX D'AIR PROPRE

(30) Priority: 09.08.1999 US 369846
(43) Date of publication of application: 15.05.2002
(73) Proprietor: Sy-Klone Company Inc., JAcksonville, FL 32217 (US)
(72) Inventor: MOREDOCK, James, G., Jacksonville, FL 32225 (US)
(74) Representative: Irniger, Ernst
(86) International application number: PCT/US2000/021652
(87) International publication number: WO 2001/010536

(56) References cited:
- SU-A- 615 247
- US-A- 1 931 194
- US-A- 2 462 797
- US-A- 3 885 934
- US-A- 5 000 769

## Description

### Technical Field

The present invention relates to a powered atmospheric ejective air precleaner device and method for separating the heavier-than-air particulate debris out of an air stream drawn into the device and ejecting the debris back into the environment outside of the device. Debris laden air can be drawn through the powered air precleaner device where it is cleaned for use in an apparatus such as an internal combustion engine, a ventilation system, a heat exchanger, an air compressor, or any apparatus needing a supply of clean air but operating in an environment where the air may be laden with debris.

### Disclosure of Invention

Air precleaners that separate heavier-than-air particles from the air to be used in combustion engines, ventilation systems, and any apparatus that draws in air laden with heavier-than-air debris are known. Air precleaners of the fixed centrifugal type, containing no rotating parts, rely upon the movement of air through the separator to be induced by, for example, the vacuum draw of the combustion engine being supplied with air by the precleaner, to drive the mechanical separation process. U.S. Patent No. 1,931,194 discloses such a passive centrifugal separator. In another known system for ventilating a rail traction motor and for dynamically purifying the ventilation air as disclosed in U.S. Patent No. 5,000,769, the motor being ventilated turns a shaft connected to a fan blade in the air predeaner to drive the mechanical separation process. All of these known air precleaners are functional, but do not address all the needs of electronically controlled combustion engines, or other apparatus that draw in air laden with heavier-than-air debris for a precleaner which adds no or minimal air intake restriction while providing high particle separating efficiency over the broad airflow range with which they are used. It has been found that these known devices suffer performance losses in their particle separating efficiency which are associated with cyclic air flow demands of the engines/operating speed of the motors which they are supplying with clean air. An object of the present invention is to provide an improved air precleaner device and more efficient method for centrifically ejecting heavier-than-air particulate debris from the air stream delivering clean air with positive pressure or no or minimal airflow restriction to the apparatus the precleaner is installed on, overcoming the aforementioned disadvantages of the known air precleaners. More particularly, an object of the present invention is to provide an improved air precleaner device and method, which meet or exceed the requirements for use of the air precleaner device in connection with an inline airflow provider for any apparatus requiring or benefiting from a dean air flow such as combustion engines, fixed airflow provider for heat exchangers and heating and air conditioning systems, and total airflow applications for ventilation systems.

The air precleaner device and method of the invention offer significant improvements in debris removal and provide positive airflow as compared with conventional atmospheric ejective air precleaners. Instead of depending on the available airflow to drive the mechanical separation process, (which adds to the restriction of the system), the invention delivers efficient atmospheric precleaning while adding no additional restriction to the apparatus on which the precleaner is installed, In fact, the air precleaner device of the invention may "supercharge" an air intake system minimizing or eliminating overall initial restriction. A fan assembly draws debris laden air into the precleaning system. The debris-laden air is then accelerated in a radial pattern where centrifugal forces acting on the debris are enhanced. These centrifugal forces then discharge the heavier-than-air debris out of a strategically placed ejection port back into the atmosphere. The air precleaner device maintains a positive air pressure on the downstream side such as a filter media, heat exchanger core, or ventilation system; therefore, the invention precleaning device does not suffer performance losses associated with cyclic airflow demands like all other atmospheric precleaners do. Instead, the air precleaner device and method of the invention provide full-time efficient precleaning in the 90% plus range of efficiency.

Specifically, a powered low restriction air precleaner device according to the invention comprises a fan located in the device for drawing debris laden air into the device. The fan includes a fan blade and a motor for rotating the fan blade. Means are provided for spinning the debris laden air drawn into the air precleaner device to form a rotating flow pattern that stratifies the debris laden air with the most massive particles of debris in the outermost orbits of the rotating flow pattern of debris laden air. An ejection duct of the device ejects debris from the rotating flow of the debris laden air in the air precleaner device to clean the air. An air outlet of the device flows the cleaned air from the device to an apparatus to be supplied with cleaned air.

The present invention also comprises an apparatus for providing a flow of clean air, the apparatus comprising, in combination, a powered low restriction air precleaner device according to the invention, in combination with an arrangement for applying a suction to the air outlet of the device for assisting drawing the debris laden air into the air precleaner device. The arrangement for applying a suction to the air outlet of the device can be an air intake of a combustion engine or another fan located downstream of the air outlet of the device, such as on the far side of a radiator for cooling a machine, or on the clean side of an air filter of an air intake system of a cab.

A method for centrifugally ejecting heavier-than-air particulate debris from debris laden air according to the invention for providing clean air to an apparatus comprises the steps of drawing debris laden air into an air precleaner device with a fan located in the de-vice, spinning the debris laden air in the air precleaner device to form a rotating flow pat-tern that stratifies the debris laden air with the most massive particles of debris in the outer-most orbits of the rotating flow pattern of debris laden air, ejecting debris in the rotating flow pattern of debris laden air in the air precleaner device from the air precleaner device to clean the air, and flowing cleaned air to an air outlet of the device.

These and other objects, features and advantages of the present invention will become more apparent from the following description when taken in connection with the accompanying drawings, which show, for purposes of illustration only, one preferred embodiment in accordance with the present invention.

### Brief Description of Drawings

Fig. 1A is a general schematic drawing, taken along the longitudinal central axis of a powered low restriction air precleaner device of the invention in combination with an apparatus for receiving cleaned air from the device.
Fig. 1B is a detailed, perspective view from the front and to one side of a preferred embodiment of the powered low restriction air precleaner device of the invention with the upper right quadrant of the device being cut away in part to expose the inside of the device.
Fig. 2 is a side elevational view of the device of Fig. 1B with an outer part of one-half of the device being cut away to permit viewing the interior of the device.
Fig. 3 is a side elevational view of the device like Fig. 2 but without a cut away portion and with arrows depicting the directions of debris laden air in, debris out and clean air out.
Fig. 4 is a perspective view from the end and to one side of the fan and motor assembly supported in the louvered motor mount of the device of Figs. 1B-3.
Fig. 5 is a perspective view from the opposite end to that shown in Fig. 4 and to one side of the fan and motor assembly supported in the louvered motor mount of the device of Figs. 1B-3.
Fig. 6 is a perspective view from one end and to the side of the motor of the air precleaner device with clamp, secondary motor mount and associated mount bosses and depicting inner and outer cylinders of the secondary motor mount.
Fig. 7 is a perspective view of the subassembly of Fig. 6 from the opposite end to that shown in Fig. 6 and to one side.
Fig. 8 is a perspective view from one end and to the side of the primary positively pressurized separation chamber of the air precleaner device.
Fig. 9 is a perspective view of the subassembly of Fig. 8 from the opposite end to that shown in Fig. 8 and to one side.
Fig. 10 is a perspective view from one end and to the side of the secondary positively pressurized separation chamber of the air precleaner device of Figs. 1B-3.
Fig. 11 is an enlarged view of the portion of the bottom of the primary and secondary separation chambers and the ejection duct with venturi for suctioning debris from the chambers and discharging it from the device through the ejection duct to ambient atmosphere.

### Best Mode for Carrying Out The Invention

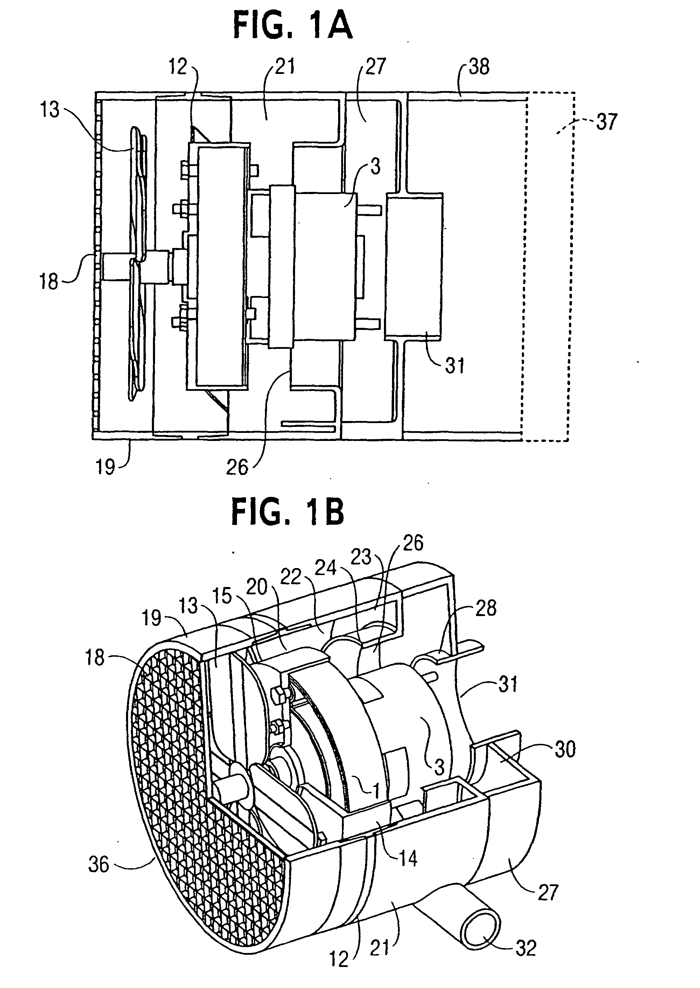

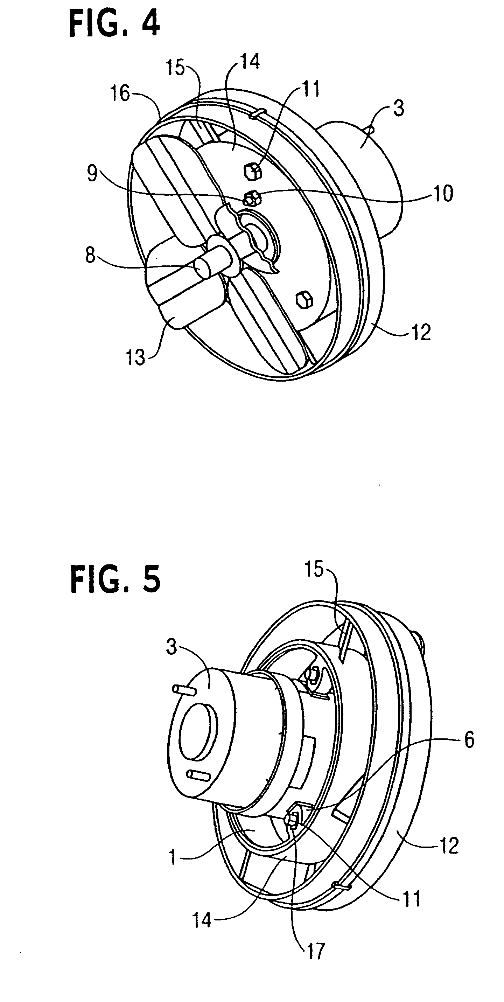

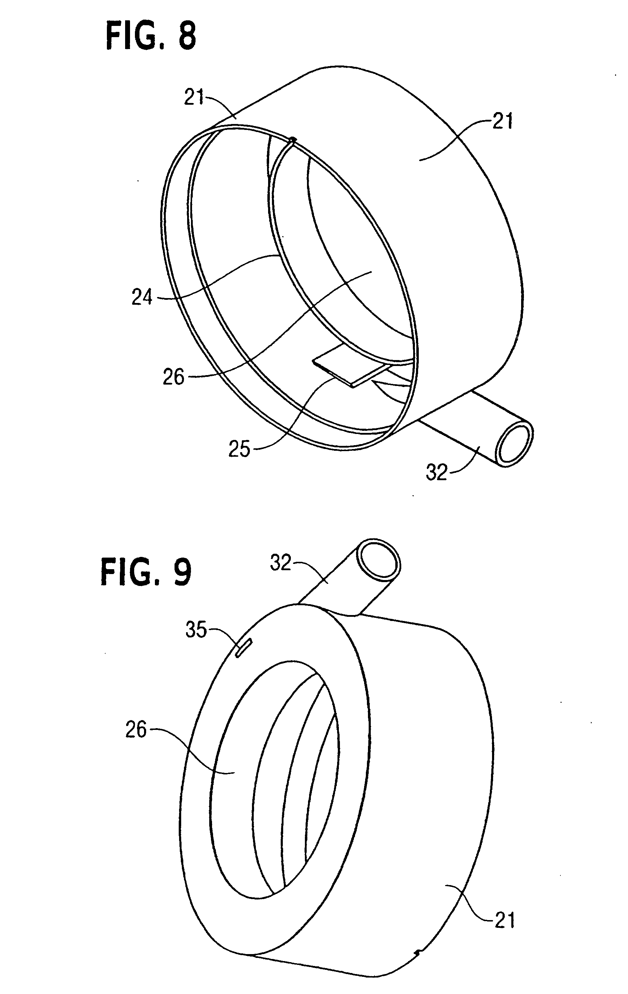

In the drawings, the precleaner device 36 of the invention, shown generally in Figure 1A and more specifically in the preferred embodiment of Figures 1B-11, comprises a prescreen apparatus 18. The prescreen apparatus is formed with holes in a flat plate or screen material to keep out very large airborne debris that would foul the ejection port 32 of the precleaner device. A fan shroud 19 is connected to the prescreen apparatus for directing the incoming, debris laden air into a Primary Positively Pressurized Separation Chamber 21. The fan shroud also starts centrifugal separation by allowing the air to rotate. The centrifugal force caused by the rotation of the incoming air moves the more massive particles outwardly.

A pusher fan comprising a fan blade 13 mounted on a motor shaft 8 of a motor 3 provides the next stage of particle separation by increasing the rotational velocity and centrifugal force of the incoming air particles. This forces the finer debris to stratify outward with the more massive debris. The pusher fan speed is preferably in proportion to the puller fan speed of the associated fan downstream of the precleaner device or designed for the specific air intake air flow so as to maintain a slight positive pressure differential against the radiator core face or air filter media, 37 in Figure 1.

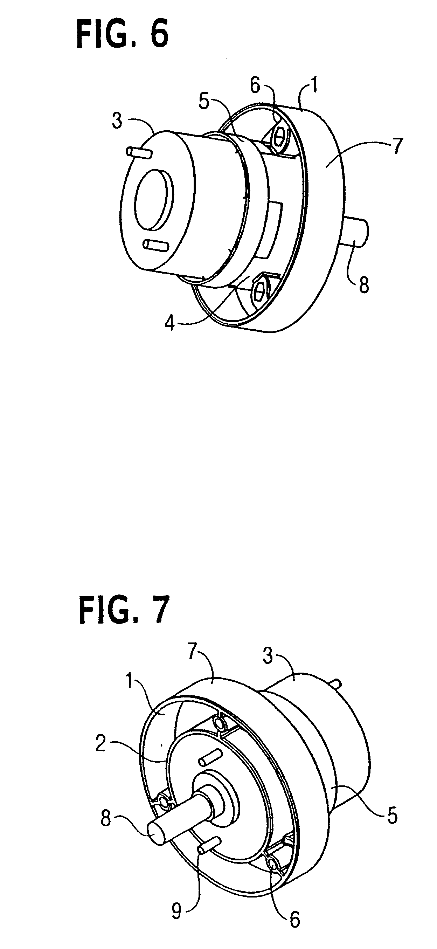

A louvered motor mount assembly 12 of the device provides particle separation by increasing the air velocity and centrifugal force of the particles passing through the Louvered Motor Mount assembly louvers 15 having reduced cross-sectional area 20 between the mounting cylinder 14 and outer cylinder 16 of the assembly 12 (nozzle effect). The shape of the center of the Louvered Motor Mount assembly diverts the debris laden air around the fan motor 3 (or linkage) and mechanically forces the debris laden air to move in an outward direction. The Louvered Motor Mount assembly may also be used to provide mechanical mounting support for the fan motor 3 (or linkage) by way of louvered motor mount mounting cylinder 14. A secondary motor mount 1 is connected to the mounting cylinder 14 by way of bolts 11 and nylon lock nut 17. Flow holes may be added to the Louvered Motor Mount to allow small portions of air to cool the motor, if needed. As shown. in Figs. 6 and 7, the motor 3 is supported by a clamp 5, secondary motor mount 1 and associated mount bosses 6 connecting inner and outer cylinders 2 and 7 of the secondary motor mount. The inner cylinder 2 has an extension 4 surrounding the motor 3. The motor 3 is also directly supported on the mount assembly 12 by way of motor studs 9 and serrated nuts 10, see Figs. 1A, 4 and 7.

A primary positively pressurized separation chamber 21 directs the debris-laden air to the secondary positively pressurized separation chamber 27, and channels the debris to the ejection port 32. An ejection port 32 located at the bottom of the Primary Positively Pressurized Separation Chamber assembly allows separated debris to be ejected back to the environment and any moisture to gravity drain.

The Secondary Positively Pressurized Chamber 27 directs the air (most debris was removed in the Primary Positively Pressurized Separation Chamber) through the Secondary Positively Pressurized Separation Chamber exit orifice 31 into the air flow outlet shroud 38 and channels any remaining debris to the Secondary De-acceleration Region debris collection scoop 34, located at the bottom of the Secondary Positively Pressurized Separation Chamber assembly 27, through the venturi port 35 into the Primary Positively Pressurized Separation Chamber assembly 21 where the debris is to be ejected back to the environment and any moisture to gravity drain. The Secondary Positively Pressurized Separation Chamber exit orifice 31 directs the cleaned air out of the secondary ejection chamber and into the airflow outlet shroud. The Secondary Positively Pressurized Separation Chamber exit orifice 31 also regulates the airflow velocity through the primary and secondary positively pressurized chambers. The airflow outlet shroud 38 directs the cleaned air to the radiator core or air filter media or the combustion engine intake, 37 in Figure 1. The airflow outlet shroud 38 can also support or hold the air filter media 37 in place.

In operation, debris laden air is drawn into and through the prescreen apparatus18 by the combined actions of two separate forces: (1) the "pusher" type fan 13, located in the precleaning device and (2) either the engine air intake suction 37 or a "puller" type fan located on the clean side of the machine's engine radiator core or on the clean side of the cab air filter media. As debris laden air passes through the prescreen apparatus 18, the prescreen apparatus 18 screen out the largest debris.

Debris laden air moves through the prescreen apparatus 18 and into the fan shroud 19 where the debris laden air is spun by the pusher fan 13 to form a rotating flow pattern. This pattern is further accelerated as the debris laden air passes through the blades in the Louvered Motor Mount assembly 12 and into the Primary Positively Pressurized Separation Chamber assembly 21, where it becomes fully stratified, with the most massive particles in the outermost orbits.

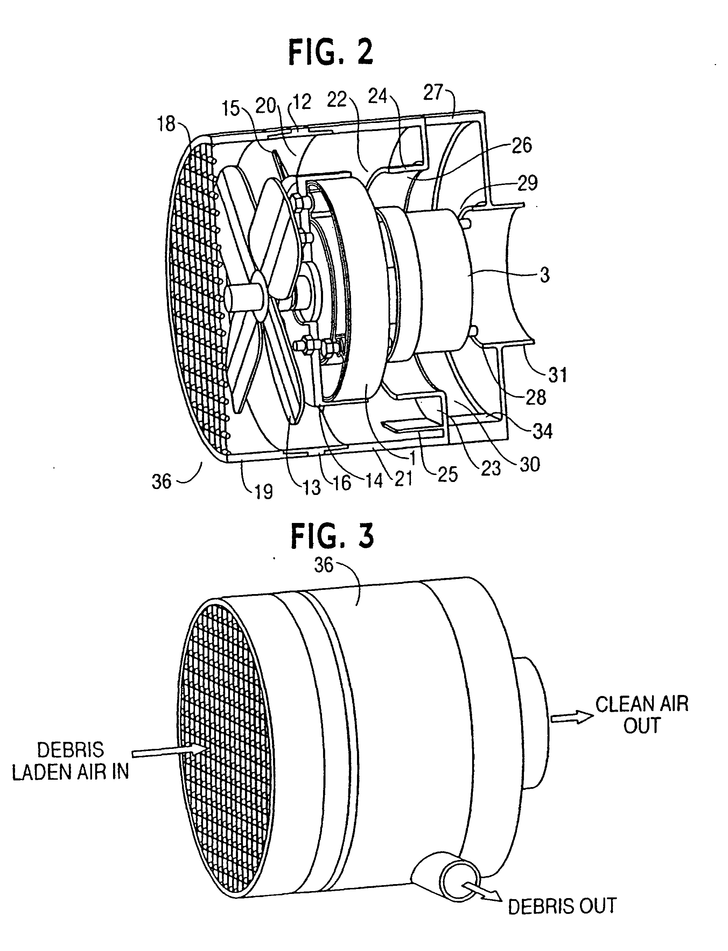

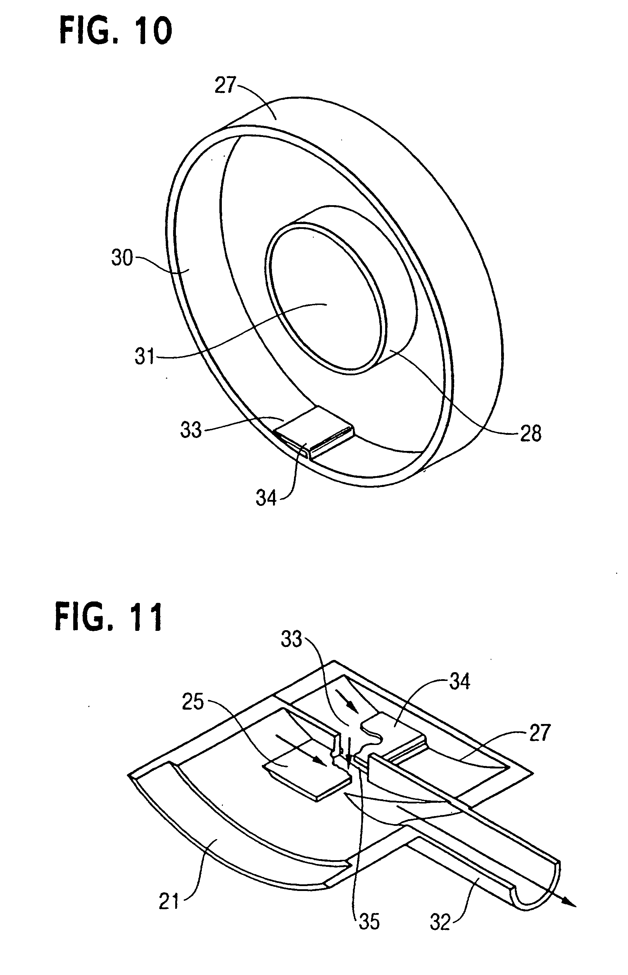

The debris-laden air enters the Primary Positively Pressurized Separation Chamber 21 and flows into the Primary De-Acceleration Region 22, which mechanically forces the air to de-accelerate. The outward momentum imparted on the more massive air borne debris is now greater than the force acting on the airflow. This causes most of the debris to be trapped in the primary isolation chamber 23 formed by the primary strike appendage 24 out of the main air flow and directed to the ejection port 32 by way of venturi port shield 25, see Figs. 2 and 11.

The air flow, with the most massive debris removed, moves into the Secondary Positively Pressurized Separation Chamber 27 and through the smaller air flow orifice 26, causing the airflow to accelerate and continue to increase in velocity as it passes into the Secondary Positively Pressurized Separation Chamber 27 assembly at the slightly larger region of the Secondary De-acceleration Region 30 which mechanically forces the air to de-accelerate. The outward momentum of the remaining air borne debris is again greater than the force acting on the airflow. This causes most of the remaining air borne debris to be trapped in the secondary isolation chamber 29 formed by the secondary strake appendage 28 and directed to the Secondary De-acceleration Region inner wall 33 and debris collection scoop 34, see Figs. 10 and 11, where the debris is channeled through the venturi port 35 into the ejection port 32. The cleaned air flows from the secondary de-acceleration region 30 and exits through the Secondary Positively Pressurized Separation Chamber exit orifice 31 into the airflow outlet shroud 38 and through the radiator core or air filter media or into the intake of the combustion engine 37.

Debris that was removed from the air rotates around the perimeter of the Primary Isolation Chamber 23 until the debris reaches the ejection port 32. The primary and secondary isolation chambers are joined together at the venturi port 35 and debris collected in the secondary isolation chamber 29 passes through the venturi port 35 into the primary isolation chamber 23 and then is ejected through the ejection port 32 located in the primary isolation chamber 23. The ejection port 32 allows debris to be ejected back to the atmosphere by the debris' outward momentum and is assisted by a positive pressure differential maintained in the isolation chambers 23 and 29 by the pusher fan. According to a further feature of the invention, the debris particles orbit the primary and secondary isolation chambers 23 and 29 until they are drawn together at the venturi port 35 developed between the first and second positively pressured isolation chambers23 and 29 and drawn into a vacuum caused by the pressure difference of the primary positively pressurized separator chamber and the ejection port 32, which vents back to the ambient conditions for the environment. The clean air system flows from the secondary de-acceleration region 30 through the secondary positively pressurized separator chamber exit orifice 31 to the apparatus 37 requiring the precleaned air.

## Claims

1. A powered low restriction air precleaner device [36] for centrifugally ejecting heavier-than-air debris from debris laden air to provide a clean air flow to an apparatus [37], said air precleaner comprising:
a fan including a fan blade [13] located in said device for drawing debris laden air into said device to form a rotating flow pattern about a longitudinal axis of said device that stratifies the debris laden air with the most massive particles of debris in the outermost orbits of the rotating flow pattern of debris laden air;
an ejection port [32] for ejecting debris from the rotating flow of the debris laden air in the air precleaner device to clean the air;
an air outlet [38] for flowing the cleaned air from the device to said apparatus; and
primary and secondary separation chambers [21, 27] arranged successively along said longitudinal axis of said device for receiving said rotating flow pattern of debris laden air and separating debris therefrom for ejection through said ejection port to clean air flowing to said air outlet;
**characterized in that**:
the fan includes a motor [3] mounted in the air precleaning device for rotating said fan blade;
a louvered vane assembly [12] is mounted in the device and arranged to progressively reduce flow cross-sectional area [20] to increase the speed of the rotating flow pattern flowing through blades [15] of the louvered vane assembly; and
each of said separation chambers includes a de-acceleration region [22, 30] which mechanically forces the air to de-accelerate and then move radially inward with respect to said longitudinal axis to exit the chamber at a location axially upstream of an isolation chamber [23, 29] axially downstream of the de-acceleration region which traps debris whose outward momentum is greater than that force trying to move the debris radially inward with the air flow exiting the separation chamber, said ejection port being in communication with each of said isolation chambers of said separation chambers for ejecting trapped debris from said air precleaner device.

2. The air precleaner device according to claim 1, further comprising a prescreening apparatus [18] through which said debris laden air is drawn into said device to remove from the incoming debris laden air any debris larger than the ejection port.

3. The air precleaner device according to claim 1, including a venturi [35] for creating a vacuum for drawing debris from the rotating flow of the debris laden air in the secondary separation chamber into the primary separation chamber for discharge through said ejection port.

4. A method for centrifugally ejecting heavier-than-air particulate debris from debris laden air providing clean air to an apparatus [37], said method comprising the steps of:
drawing debris laden air into an air precleaner device [36] with a fan including a fan blade [13] located in the device to form a rotating flow pattern about a longitudinal axis of the device that stratifies the debris laden air with the most massive particles of debris in the outermost orbits of the rotating flow pattern of debris laden air;
ejecting [32] debris in the rotating flow pattern of debris laden air in the air precleaner device from the air precleaner device to clean the air; and
flowing cleaned air to an air outlet [38] of said device; and said method including flowing the rotating flow pattern into primary and secondary separation chambers arranged successively along said longitudinal axis of said device for receiving said rotating flow pattern of debris laden air and separating debris therefrom for ejection to clean air flowing to said air outlet;
**characterized in that**:
rotation of the fan blade is performed by a motor located in the device;
the flowing of the rotating flow pattern in the device is increased in speed by flowing the rotating flow pattern through the blades [15] of a louvered vane assembly [12] which has a progressively reduced flow cross-sectional area [20]; and
in each of said separation chambers de-accelerating the air in a de-acceleration region [22, 30] and mechanically forcing the air to move radially inward with respect to said longitudinal axis to exit the chamber at a location axially upstream of an isolation chamber [23, 29] axially downstream of the de-acceleration region which traps debris whose outward momentum is greater than that force trying to move the debris radially inward with the air flow exiting the separation chamber, trapped debris in each of the isolation chambers being ejected from the air precleaner device.

5. The method according to claim 4, wherein said ejecting includes drawing debris from the device using a vacuum created by a venturi located in conjunction with an ejection port of said device.

6. The method according to claim 4, including maintaining a positive pressure in each of said separation chambers.

7. The method according to claim 6, wherein said ejecting involves venting the air borne debris to the ambient environment from said positively pressurized separation chambers through an ejection port of said device.

8. (Amended) The method according to claim 4, including ejecting air borne debris from each of said primary and secondary separation chambers through a common ejection port.

9. The method according to claim 4, including moving trapped debris within the device using a vacuum created by a venturi [35] located at a point joining said isolation chambers of said primary and secondary separation chambers, in conjunction with an ejection port of said device.

10. The method according to claim 4, including supporting the motor in said device by way of said louvered vane assembly.

11. (Amended) The method according to claim 4, wherein the cleaned air flowing from said primary separation chamber is drawn to the center of said separation chamber where it exits through an orifice [26] of the chamber.

12. The method according to claim 4, including facilitating said drawing of said debris laden air into said air predeaner device by applying a suction to said air outlet of said device.

13. The method according to claim 12, further comprising applying said suction to said air outlet of said device by an air intake of a combustion engine.

14. The method according to claim 12, further comprising applying said suction to said air outlet of said device by another fan located downstream of said air outlet of said device.

15. The method according to claim 14, wherein said another fan located downstream of said air outlet of said device is on the far side of a radiator for cooling a machine.

16. The method according to claim 14, wherein said another fan located downstream of said air outlet of said device is on the clean side of an air filter of an air intake system of a passenger cabin.

17. The method according to claim 4, wherein said debris laden air is drawn into said device in an axial flow pattern.

## Patentansprüche

1. Angetriebene Vorrichtung zur Vorfilterung von Luft mit niedriger Drosselung (36) zum Auswerfen von Fremdkörpern durch Fliehkräfte, die schwerer als Luft sind, aus einer mit Fremdkörpern beladenen Luft, um einen sauberen Luftstrom zu einem Apparat (37) zur Verfügung zu stellen, wobei die Vorfilterung von Luft umfasst:
einen Ventilator, der eine Ventilatorschaufel (13) enthält, der in der Vorrichtung zum Ansaugen der mit Fremdkörpern beladenen Luft in die Vorrichtung angeordnet ist, um ein rotierendes Flussmuster um eine Längsachse der Vorrichtung zu bilden, der die mit Fremdkörpern beladene Luft mit den schwersten partikelförmigen Fremdkörpern in die äußersten Umlaufbahnen des rotierenden Flussmusters der mit Fremdkörpern beladenen Luft schichtet;
einen Auswurfkanal (32) zum Auswerfen von Fremdkörpern aus dem rotierenden Fluss der mit Fremdkörpern beladenen Luft in die Vorrichtung zur Vorfilterung von Luft, um die Luft zu reinigen;
einen Luftauslass (38) zum Fließenlassen der gereinigten Luft aus der Vorrichtung zu dem Apparat; und
primäre und sekundäre Abscheidekammern (21, 27), die hintereinander entlang der Längsachse der Vorrichtung angeordnet sind, zum Aufnehmen des rotierenden Flussmusters der mit Fremdkörpern beladenen Luft und Abscheiden von Fremdkörpern daraus zum Auswerfen durch den Auswurfkanal, um den Luftfluss zu dem Luftauslass zu reinigen;
**dadurch gekennzeichnet, dass**:
der Ventilator einen Motor (3) enthält, der in der Vorrichtung zur Vorfilterung von Luft befestigt ist, um die Ventilatorschaufel zum Rotieren zu bringen;
eine mit Lüftungsschlitzen versehene Schaufelanordnung (12) in der Vorrichtung montiert und derart angeordnet ist, dass im ansteigenden Maße der Flussquerschnittsbereich (20) verringert wird, um die Geschwindigkeit des rotierenden Flussmusters, das durch Schaufeln (15) der mit Lüftungsschlitzen versehenen Schaufelanordnung fließt, zu erhöhen; und
jede der Abscheidekammern einen Abbremsbereich (22, 30) enthält, welcher mechanisch erzwingt, dass die Luft abgebremst wird und sich dann radial nach innen bezüglich der Längsachse bewegt, um die Kammer an einem Ort axial stromaufwärts der Isolationskammer (23, 29), axial stromabwärts des Abbremsbereichs verlässt, welche Fremdkörper einfängt, deren nach außen gerichteter Impuls größer als die Kraft ist, die versucht die Fremdkörper radial nach innen mit dem Luftstrom zu bewegen und dabei die Abscheidekammer zu verlassen, wobei der Auswurfkanal in Kontakt ist mit jeder der Isolationskammern der Abscheidekammern zum Auswerfen von eingefangenen Fremdkörpern von der Vorrichtung zur Vorfilterung von Luft.

2. Vorrichtung nach Anspruch 1, ferner umfassend eine Vorsiebvorrichtung (18), durch welche die mit Fremdkörpern beladene Luft in die Vorrichtung gesaugt wird, um jegliche Fremdkörper, die größer als der Auswurfkanal sind, von der hereinkommenden Luft beladen mit Fremdkörpern zu entfernen.

3. Vorrichtung nach Anspruch 1, die eine Venturidüse (35) zum Erzeugen eines Unterdrucks enthält zum Ansaugen von Fremdkörpern aus dem rotierenden Fluss der mit Fremdkörpern beladenen Luft in der sekundären Abscheidekammer in die primäre Abscheidekammer zum Absondern durch den Auswurfkanal.

4. Verfahren zum Auswerfen von partikelförmigen Fremdkörpern mit Fliehkräften, die schwerer sind als Luft, aus einer mit Fremdkörpern beladenen Luft, um saubere Luft zu einem Apparat (37) zur Verfügung zu stellen, wobei dieses Verfahren die Schritte umfasst:
Ansaugen von mit Fremdkörpern beladener Luft in eine Vorrichtung zur Vorfilterung von Luft (36) mit einem Ventilator, der eine Ventilatorschaufel (13) enthält, der in der Vorrichtung angeordnet ist, um ein rotierendes Flussmuster um eine Längsachse der Vorrichtung zu bilden, die die mit Fremdkörpern beladene Luft mit den schwersten partikelförmigen Fremdkörpern in den äußersten Umlaufbahnen des rotierenden Flussmusters der mit Fremdkörpern beladenen Luft, schichtet;
Auswerfen (32) von Fremdkörpern in dem rotierenden Flussmuster der mit Fremdkörpern beladenen Luft in die Vorrichtung zur Vorfilterung von Luft von der Vorrichtung zur Vorfilterung von Luft, um die Luft zu reinigen; und
Fließen von gereinigter Luft zu einem Luftauslass (38) der Vorrichtung; wobei das Verfahren das Fließen des rotierenden Flussmusters in primäre und sekundäre Abscheidekammern enthält, die hintereinander folgend entlang der Längsachse der Vorrichtung zur Aufnahme des rotierenden Flussmusters der mit Fremdkörpern beladenen Luft angeordnet sind und Fremdkörper zum Auswerfen abgeschieden werden, um den Luftstrom zu dem Luftauslass zu reinigen;
**dadurch gekennzeichnet, dass**:
die Rotation der Ventilatorschaufel durch einen Motor erfolgt, der in der Vorrichtung angeordnet ist;
die Geschwindigkeit des Fließens des rotierenden Flussmusters in der Vorrichtung erhöht wird durch das Fließen des rotierenden Flussmusters durch die Ventilatorschaufeln (15) einer mit Lüftungsschlitzen versehenen Schaufelanordnung (12), welche einen im zunehmenden Maße reduzierten Flussquerschnittsbereich (20) aufweist; und in jeder der Abscheidekammern die Luft in einem Abbremsbereich (22, 30) abgebremst wird und mechanisch die Luft dazu gebracht wird, sich radial nach innen bezogen auf die Längsachse zu bewegen, um die Kammer an einem Ort axial stromaufwärts einer Isolationskammer (23, 29) axial stromabwärts des Abbremsbereichs zu verlassen, welche die Fremdkörper einfängt, deren nach außen gerichteter Impuls größer als die Kraft ist, die versucht die Fremdkörper radial nach innen mit dem Luftstrom, der die Abscheidekammer verlässt, zu bewegen, wobei eingefangene Fremdkörper in jeder der Isolationskammern aus der Vorrichtung zur Vorfilterung von Luft ausgeworfen werden.

5. Verfahren nach Anspruch 4, wobei das Auswerfen das Ansaugen von Fremdkörpern aus der Vorrichtung enthält, wobei Unterdruck genutzt wird, die von einer Venturidüse erzeugt wird, die unter Berücksichtigung eines Auswurfkanals der Vorrichtung angeordnet wird.

6. Verfahren nach Anspruch 4, wobei ein Überdruck in jeder der Abscheidekammern aufrechterhalten wird.

7. Verfahren nach Anspruch 6, wobei das Auswerfen das Entlüften der durch die Luft getragenen Fremdkörper zu der Außenumgebung von den unter Überdruck stehenden Abscheidekammern durch einen Auswurfkanal der Vorrichtung einschließt.

8. Verfahren nach Anspruch 4, wobei von durch die Luft getragene Fremdkörper aus jeder der primären und sekundären Abscheidekammern durch einen gemeinsamen Auswurfkanal ausgeworfen werden.

9. Verfahren nach Anspruch 4, wobei sich eingefangene Fremdkörper innerhalb der Vorrichtung bewegen, wobei ein Unterdruck genutzt wird, der durch eine Venturidüse (35) erzeugt wird, die an einem Punkt angeordnet ist, der die Isolationskammern der primären und sekundären Abscheidekammern, unter Berücksichtigung eines Auswurfkanals der Vorrichtung, verbindet.

10. Verfahren nach Anspruch 4, wobei der Motor in der Vorrichtung durch die mit Lüftungsschlitzen versehene Schaufelanordnung gehalten wird.

11. Verfahren nach Anspruch 4, wobei die gereinigte Luft, die von der primären Abscheidekammer strömt, zum Mittelpunkt der Abscheidekammer gezogen wird, wo sie durch eine Blendenöffnung (26) der Kammer ausgelassen wird.

12. Verfahren nach Anspruch 4, wobei das Ansaugen der mit Fremdkörpern beladenen Luft in die Vorrichtung zur Vorfilterung von Luft durch Anwendung einer Ansaugung zu dem Luftauslass der Vorrichtung gefördert wird.

13. Verfahren nach Anspruch 12, ferner umfassend das Anwenden der Ansaugung zu dem Luftauslass der Vorrichtung durch einen Lufteinlass einer Verbrennungsmaschine.

14. Verfahren nach Anspruch 12, ferner umfassend das Anwenden der Ansaugung zu dem Luftauslass der Vorrichtung durch einen anderen Ventilator, der stromabwärts des Luftauslasses der Vorrichtung angeordnet ist.

15. Verfahren nach Anspruch 14, wobei der andere Ventilator, der stromabwärts von dem Luftauslass der Vorrichtung angeordnet ist, auf der gegenüberliegenden Seite eines Kühlers zum Abkühlen einer Maschine angeordnet ist.

16. Verfahren nach Anspruch 14, wobei der andere Ventilator, der stromabwärts von dem Luftauslass der Vorrichtung angeordnet ist, auf der sauberen Seite eines Luftfilters eines Lufteinlasssystems einer Passagierkabine angeordnet ist.

17. Verfahren nach Anspruch 4, wobei die mit Fremdkörpern beladene Luft in die Vorrichtung in einem axialen Flussmuster hineingezogen wird.

## Revendications

1. Dispositif préépurateur d'air motorisé (36) à faible étranglement pour éjecter par centrifugation des poussières plus lourdes que l'air présentes dans de l'air chargé de poussières, afin de fournir un flux d'air propre à un appareil (37), ledit préépurateur d'air comprenant :
un ventilateur comprenant une pale de ventilateur (13) située dans ledit dispositif pour entraîner dans celui-ci l'air chargé de poussières afin de créer un système d'écoulement rotatif autour d'un axe longitudinal dudit dispositif, qui stratifie l'air chargé de poussières, les particules de poussières les plus lourdes étant dans les orbites situées le plus à l'extérieur du système d'écoulement rotatif d'air chargé de poussières ;
un orifice d'éjection (32) pour éjecter les poussières de l'écoulement rotatif d'air chargé de poussières défini dans le dispositif préépurateur d'air, afin d'épurer l'air ;
une sortie d'air (38) pour diriger l'air épuré du dispositif vers ledit appareil ; et
des chambres de séparation primaire et secondaire (21, 27) disposées successivement le long dudit axe longitudinal dudit dispositif pour recevoir ledit système d'écoulement rotatif d'air chargé de poussières, et pour séparer les poussières de celui-ci afin de les éjecter à travers ledit orifice d'éjection en vue d'épurer l'air se dirigeant vers ladite sortie d'air ;
**caractérisé en ce que** :
le ventilateur comprend un moteur électrique (3) monté dans le dispositif préépurateur d'air pour entraîner en rotation ladite pale de ventilateur ;
un ensemble formant aubage à ailettes (12) est monté dans le dispositif et conçu pour réduire progressivement une section d'écoulement (20) afin d'augmenter la vitesse du système d'écoulement rotatif grâce à des ailettes (15) de l'ensemble formant aubage à ailettes ; et
chacune desdites chambres de séparation comprend une zone de décélération (22, 30) contraignant mécaniquement l'air à ralentir et à se déplacer ensuite radialement vers l'intérieur par rapport audit axe longitudinal pour sortir de la chambre au niveau d'un emplacement situé axialement en amont d'une chambre d'isolement (23, 29) située axialement en aval de la zone de décélération et piégeant les poussières dont la force centrifuge est supérieure à la force qui tend à déplacer les poussières radialement vers l'intérieur en même temps que le flux d'air sortant de la chambre de séparation, ledit orifice d'éjection étant en communication avec chacune desdites chambres d'isolement desdites chambres de séparation afin d'éjecter les poussières piégées dudit dispositif préépurateur d'air.

2. Dispositif préépurateur d'air selon la revendication 1, comprenant en outre un appareil de préfiltrage (18) par l'intermédiaire duquel ledit air chargé de poussières est entraîné dans ledit dispositif afin d'éliminer de l'air chargé de poussières entrant toutes les poussières plus grosses que l'orifice d'éjection.

3. Dispositif préépurateur d'air selon la revendication 1, comprenant un venturi (35) destiné à créer une dépression pour aspirer dans la chambre de séparation primaire les poussières de l'écoulement rotatif d'air chargé de poussières dans la chambre de séparation secondaire afin de les évacuer à travers ledit orifice d'éjection.

4. Procédé pour éjecter par centrifugation des poussières particulaires plus lourdes que l'air présentes dans de l'air chargé de poussières fournissant de l'air propre à un appareil (37), ledit procédé comprenant les étapes consistant à :
entraîner dans un dispositif préépurateur d'air (36) de l'air chargé de poussières à l'aide d'un ventilateur comprenant une pale de ventilateur (13) située dans le dispositif afin de créer un système d'écoulement rotatif autour d'un axe longitudinal du dispositif, qui stratifie l'air chargé de poussières, les particules de poussières les plus lourdes étant dans les orbites situées le plus à l'extérieur du système d'écoulement rotatif d'air chargé de poussières ;
éjecter (32) les poussières situées dans le systyme d'écoulement rotatif d'air chargé de poussières défini dans le dispositif préépurateur d'air, afin d'épurer l'air ; et
diriger l'air épuré vers une sortie d'air (38) dudit dispositif ; ledit procédé comprenant l'étape consistant à faire circuler le système d'écoulement rotatif dans des chambres de séparation primaire et secondaire disposées successivement le long dudit axe longitudinal dudit dispositif pour recevoir ledit système d'écoulement rotatif d'air chargé de poussières, et pour séparer les poussières de celui-ci afin de les éjecter en vue d'épurer l'air se dirigeant vers ladite sortie d'air ;
**caractérisé en ce que** :
la rotation de la pale de ventilateur est assurée par un moteur électrique placé dans le dispositif ;
la vitesse d'écoulement du système d'écoulement rotatif dans le dispositif est augmentée en faisant passer le système d'écoulement rotatif à travers les ailettes (15) d'un ensemble formant aubage à ailettes (12) qui présente une section d'écoulement (20) progressivement réduite ; et
dans chacune desdites chambres de séparation, la décélération de l'air dans une zone de décélération (22, 30), et la contrainte mécanique de l'air à se déplacer radialement vers l'intérieur par rapport audit axe longitudinal pour sortir de la chambre au niveau d'un emplacement situé axialement en amont d'une chambre d'isolement (23, 29) située axialement en aval de la zone de décélération et piégeant les poussières dont la force centrifuge est supérieure à la force qui tend à déplacer les poussières radialement vers l'intérieur en même temps que le flux d'air sortant de la chambre de séparation, les poussières piégées dans chacune des chambres d'isolement étant éjectées du dispositif préépurateur d'air.

5. Procédé selon la revendication 4, dans lequel ladite éjection comprend l'entraînement des poussières à partir du dispositif à l'aide d'une dépression créée par un venturi placé en association avec un orifice d'éjection dudit dispositif.

6. Procédé selon la revendication 4, comprenant le maintien d'une pression positive dans chacune desdites chambres de séparation.

7. Procédé selon la revendication 6, dans lequel ladite éjection implique l'évacuation des poussières portées par l'air vers le milieu ambiant, à partir desdites chambres de séparation sous pression positive, par l'intermédiaire d'un orifice d'éjection dudit dispositif.

8. Procédé selon la revendication 4, comprenant l'éjection des poussières portées par l'air à partir de chacune desdites chambres de séparation primaire et secondaire, à travers un orifice d'éjection commun.

9. Procédé selon la revendication 4, comprenant le déplacement des poussières piégées à l'intérieur du dispositif à l'aide d'une dépression créée par un venturi (35) situé au niveau d'un point reliant lesdites chambres d'isolement desdites chambres de séparation primaire et secondaire, en association avec un orifice d'éjection dudit dispositif.

10. Procédé selon la revendication 4, comprenant le support du moteur électrique dans ledit dispositif à l'aide dudit ensemble formant aubage à ailettes.

11. Procédé selon la revendication 4, dans lequel l'air épuré qui s'écoule à partir de ladite chambre de séparation primaire est entraîné vers le centre de ladite chambre de séparation d'où il sort à travers un orifice (26) de la chambre.

12. Procédé selon la revendication 4, comprenant la facilitation dudit entraînement dudit air chargé de poussières dans ledit dispositif préépurateur d'air, par application d'une aspiration à ladite sortie d'air dudit dispositif.

13. Procédé selon la revendication 12, comprenant en outre l'application de ladite aspiration à ladite sortie d'air dudit dispositif par une admission d'air d'un moteur à combustion.

14. Procédé selon la revendication 12, comprenant en outre l'application de ladite aspiration à ladite sortie d'air dudit dispositif par un autre ventilateur disposé en aval de ladite sortie d'air dudit dispositif.

15. Procédé selon la revendication 14, dans lequel ledit autre ventilateur situé en aval de ladite sortie d'air dudit dispositif est disposé du côté opposé à un radiateur servant au refroidissement d'une machine.

16. Procédé selon la revendication 14, dans lequel ledit autre ventilateur situé en aval de ladite sortie d'air dudit dispositif est disposé sur le côté propre d'un filtre à air d'un système d'admission d'air d'un habitacle pour passagers.

17. Procédé selon la revendication 4, dans lequel ledit air chargé de poussières est entraîné dans ledit dispositif suivant un système d'écoulement axial.
